Europäisches Patentamt

European Patent Office

Office européen des brevets

(11) Veröffentlichungsnummer: **0 426 999 A2**

# EUROPÄISCHE PATENTANMELDUNG

(21) Anmeldenummer: 90119381.3

(22) Anmeldetag: **10.10.90**

(51) Int. Cl.5: **G01L 23/16**, G01L 23/22

Die Bezeichnung der Erfindung wurde geändert (Richtlinien für die Prüfung im EPA, A-III, 7.3).

(30) Priorität: **12.10.89 DE 3934118**

(43) Veröffentlichungstag der Anmeldung:
**15.05.91 Patentblatt 91/20**

(84) Benannte Vertragsstaaten:
**DE ES FR GB IT SE**

(71) Anmelder: **Bayerische Motoren Werke Aktiengesellschaft Patentabteilung AJ-30 Postfach 40 02 40 Petuelring 130 W-8000 München 40(DE)**

(72) Erfinder: **Fischer, Gregor Neptuweg 19 W-8011 Aschheim(DE)**

(54) **Drucksensoreinrichtung in Brennkraftmaschinen.**

(57) Eine Sensoreinrichtung in Brennkraftmaschinen zur Bestimmung des Verbrennungsdrucks, die als Scheibendichtung zwischen der Sitzfläche einer Zündkerze und der zugehörigen Sitzfläche eines Zylinderkopfs angeordnet ist, ist durch den Druck in einem innerhalb der Scheibendichtung ausgebildeten und mit dem Brennraum in gasdichter Verbindung stehenden Druckraum beaufschlagt. Auf diese Weise wird es möglich, den wirksamen Verbrennungsdruck außerhalb des Brennraums auf besonders einfache und insbesondere optische Weise zu bestimmen.

EP 0 426 999 A2

Die Erfindung bezieht sich auf eine Sensoreinrichtung nach dem Oberbegriff des Patentanspruchs 1.

Bei einer derartigen, aus der DE 3504039 bekannten Sensoreinrichtung ist diese ein piezoelektrischer Druckring, der indirekt mit dem Druck im Brennraum beaufschlagt ist. Der Verbrennungsdruck, der auf die Zündkerze wirkt, entlastet den Druckring. Die Veränderung des durch das Anziehen der Zündkerze vorgegebenen Ausgangsdrucks wird somit erfaßt und piezoelektrisch in ein Drucksignal umgesetzt.

Voraussetzung für die Wirksamkeit der bekannten Sensoreinrichtung ist die Vorgabe eines definierten Anzugsmoments der Zündkerze bei ihrer Befestigung. Da dieses in der Regel starken Schwankungen unterliegt und während des Betriebs der Brennkraftmaschine temperaturbedingt schwankt, ist die Aussagekraft des gelieferten Drucksignals problematisch. Hinzu kommen Einflüsse durch die Eigenschwingung der Zündkerze selbst, die in der Regel nicht vorhersehbar sind und wenn überhaupt nur schwer zu berücksichtigen sind.

Der Erfindung liegt die Aufgabe zugrunde, eine Sensoreinrichtung der eingangs genannten Art zu schaffen, die sich durch konstruktive Einfachheit auszeichnet und die ein exaktes Maß für den im Brennraum wirksamen Druck liefert.

Die Erfindung löst diese Aufgabe durch die kennzeichnenden Merkmale des Patentanspruchs 1. Durch die direkte Druckbeaufschlagung mit dem Druck im Brennraum lassen sich fertigungstechnische Einflüsse, wie sie sich beispielsweise bei der Montage der Zündkerze ergeben ebenso ausschließen, wie Einflüsse, die durch das Schwingungsverhalten der Zündkerze selbst bedingt sind. Es ist lediglich erforderlich, den Druck innerhalb der Scheibendichtung selbst zu erfassen.

Hierfür bietet sich gem. einer vorteilhaften Ausgestaltung der Erfindung ein lichtoptischer Druk-kaufnehmer an, der eine mit dem Druck im Brennraum beaufschlagte Membran besitzt. Ein derartiger Drucksensor ist im Prinzip aus der EP 219 509 B1 bei einer Anordnung innerhalb der Zündkerze selbst bekannt. Jedoch findet sich in dieser Druckschrift kein Hinweis darauf, auf welche Weise die Lage der Membran und damit der auf sie wirkende Druck bestimmt wird.

Hierzu sieht eine vorteilhafte Ausgestaltung der Erfindung vor, die Membran etwa mittig mit Licht zu bestrahlen und aus dem Reflexionsgrad des Lichts die Lage der Membran zu bestimmen. Ge-genüber alternativen Ausführungsformen, bei de-nen die Lage der Membran beispielsweise mit Hilfe von Lichtschranken bestimmt wird, ergibt sich hier der Vorteil der konstruktiven Einfachheit. Darüber hinaus ergibt sich gegenüber optischen Sensoranordnungen, wie sie beispielsweise aus der der DE-OS 31 12 327 zur Erfassung physikalischer Parameter im Brennraum einer Brennkraftmaschine mit einem dem Brennraum zugewandten optischen Aufnehmer bekannt sind, der vorzeigt, auf die Bildung der Referenz mit Hilfe eines Referenzlichts zu verzichten. Bedingt durch den im Prinzip bekannten Druckverlauf innerhalb des Verbrennungszyklus läßt sich der Zeitpunkt relativ exakt bestimmen, bei dem innerhalb des Brennraums atmosphärischer Druck herrscht. Das zu diesem Zeitpunkt reflektierte Licht kann somit ohne weiteres als Referenz dienen.

Schließlich beschäftigt sich eine Weiterbildung der Erfindung mit der Verbindung des Druckraums mit dem Brennraum der Brennkraftmaschine. Hierzu können beispielsweise innerhalb des Gewindegangs der Zündkerzen entsprechende Durchbrüche oder dergleichen vorgesehen sein. Demgegenüber ergibt sich eine vorteilhafte Ausgestaltung durch eine Bohrung, die innerhalb des Zylinderkopfs eine Verbindung zwischen Druckraum um dem Brennraum herstellt. Eine derartige Bohrung läßt sich fertigungstechnisch besonders einfach anbringen.

In der Zeichnung ist ein Ausführungsbeispiel der Erfindung dargestellt.

Es zeigt

Fig. 1 eine Sensoreinrichtung gem. der Erfindung im Querschnitt

Fig. 2 die Sensoreinrichtung von Fig. 1 in der Draufsicht und

Fig. 3 eine Einzelheit in Verbindung mit der Sensoreinrichtung von Fig. 1 und 2.

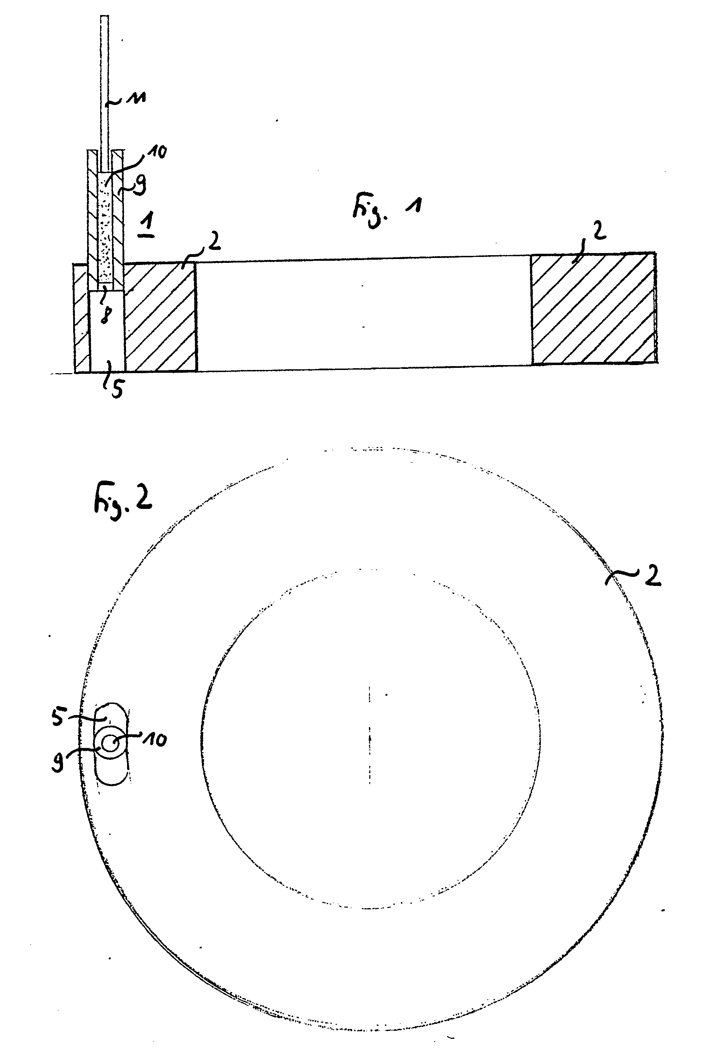

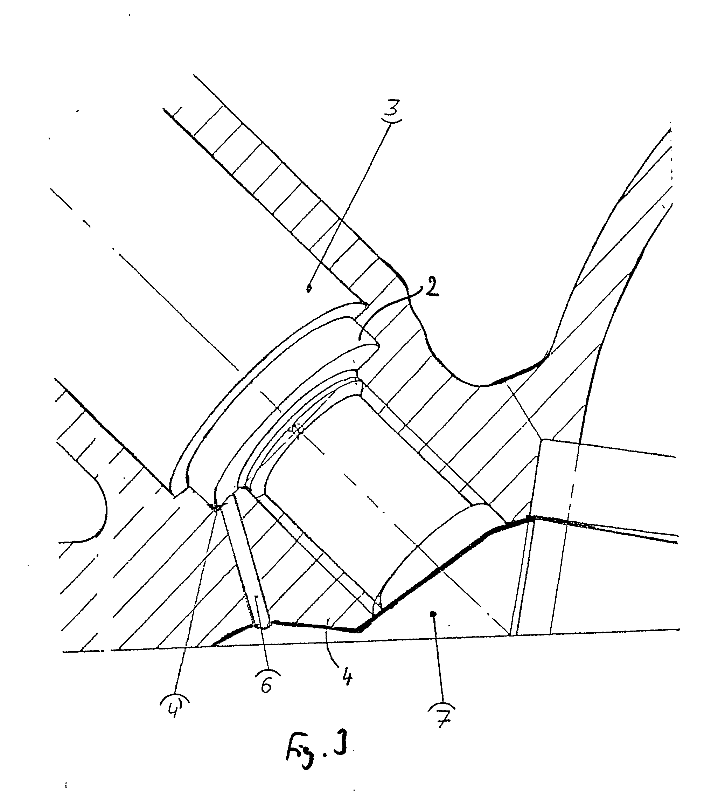

Die Sensoreinrichtung 1 von Fig. 1 ist in einer Scheibendichtung 2 angeordnet. Die Scheibendichtung 2 sitzt zwischen einer teilweise in Fig. 3 dargestellten Zündkerze 3 einer Brennkraftmaschine und der dieser zugeordneten Sitzfläche 4' eines Zylinderkopfs 4. Die Scheibendichtung 2 ist steif und besteht aus einem geeigneten temperaturbeständigen Werkstoff.

Innerhalb der Scheibendichtung 2 ist ein Druckraum 5 ausgebildet, der wie insbesondere in Fig. 3 zu erkennen ist, über eine Bohrung 6 im Zylinderkopf 4 mit dem Brennraum 7 eines Zylinders der Brennkraftmaschine in Verbindung steht. Das innerhalb des Druckraums 5 und der Bohrung 6 gebildete Volumen ist wesentlich kleiner als das Volumen des Brennraums 7.

Die Sensoreinrichtung 1 ihrerseits weist eine Membran 8 auf, die dem Druckraum 5 zugewandt ist. Die Membran 8 sitzt in einem Rohr 9, das gasdicht innerhalb der Scheibendichtung 2 befestigt ist. Innerhalb des Rohres 9 schließt an die Membran 8 ein lichtleitender Körper 10 an, der seinerseits optisch mit einem Lichtwellenleiter 11 verbunden ist.

Über den Lichtwellenleiter 11 wird Licht in die Sensoreinrichtung 1 eingekoppelt. Abhängig von der Stellung und insbesondere der Durchbiegung der Membran 8 stellt sich das Reflexionsvermögen dieses Lichts an der dem Lichtwellenleiter 11 zugewandten Oberseite der Membran ein. Das von dieser Oberfläche über den lichtleitenden Körper 10 in den Lichtwellenleiter reflektierte Licht ist somit ein Maß für die Stellung der Membran 8.

Die Stellung bzw. die Durchbiegung der Membran 8 hängt allein ab vom Druck im Druckraum 5, der seinerseits exakt gleich dem Druck im Brennraum des Zylinder ist.

Es ist ohne weiteres zu erkennen, daß die Sensoreinrichtung im Hinblick auf die elektromagnetische Einflüsse störungsfrei arbeitet. Ferner ist die Arbeitsweise der Sensoreinrichtung 1 unabhängig davon, mit welchem Anzugsmoment die Zündkerze 3 innerhalb des Zylinderkopfs befestigt ist.

Der mit Hilfe der Sensoreinrichtung bestimmte Druck innerhalb des Brennraums 1 ermöglicht somit ein störungsfreies Erkennen insbesondere von anormalen hohen Druckwerten, wie beispielsweise bei einer klopfenden Verbrennung auftreten. Auf diese Weise wird es fertigungstechnisch besonders günstig möglich, den Druck innerhalb des Brennraums der Brennkraftmaschine zu erfassen.

## Ansprüche

1. Sensoreinrichtung in Brennkraftmaschinen zur Bestimmung des Verbrennungsdrucks, die als Scheibendichtung zwischen der Sitzfläche einer Zündkerze und der zugehörigen Sitzfläche des Zylinderkopfs angeordnet ist, dadurch gekennzeichnet, daß die Sensoreinrichtung 1 dem Druck in einem innerhalb der Scheibendichtung ausgebildeten und mit dem Brennraum in gasdichter Verbindung stehenden Druckraum 5 ausgesetzt ist.

2. Sensoreinrichtung nach Anspruch 1, dadurch gekennzeichnet, daß sie eine mit dem Druck im Brennraum beaufschlagten Membran 8 besitzt und daß die Lage der Membran lichtoptisch bestimmt ist.

3. Sensoreinrichtung nach Anspruch 2, dadurch gekennzeichnet, daß die Membran 8 etwa mittig mit Licht beaufschlagt ist und daß der Reflexionsgrad des Lichts an der Membran als Maß für die Lage der Membran verwendet ist.

4. Sensoreinrichtung nach einem der Ansprüche 1 bis 3, dadurch gekennzeichnet, daß der Druckraum 5 über eine im Zylinderkopf 4 vorgesehene Bohrung 6 unmittelbar mit dem Brennraum 7 der Brennkraftmaschine in Verbindung steht.

Fig. 1

Fig. 2

Fig. 3